(19) Europäisches Patentamt
European Patent Office
Office européen des brevets

(11) **EP 2 317 635 A1**

(12) **EUROPEAN PATENT APPLICATION**

(43) Date of publication:
**04.05.2011 Bulletin 2011/18**

(51) Int Cl.:
**H02M 3/158** $^{(2006.01)}$

(21) Application number: **09174753.5**

(22) Date of filing: **02.11.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **ABB Research Ltd**
**8050 Zürich (CH)**

(72) Inventors:
• **Coccia, Antonio**
  **8050, Zürich (CH)**
• **Canales, Francisco**
  **8050, Zürich (CH)**

• **Escobar, Gerardo**
  **8050, Zürich (CH)**
• **Serpa, Leonardo-Augusto**
  **8050, Zürich (CH)**
• **Paakkinen, Mikko**
  **8050, Zürich (CH)**

(74) Representative: **Valkeiskangas, Tapio Lassi Paavali**
  **Kolster Oy Ab**
  **Iso Roobertinkatu 23**
  **P.O. Box 148**
  **00121 Helsinki (FI)**

(54) **Non-isolated DC-DC converter assembly**

(57) A non-isolated DC-DC converter assembly comprising a boost converter and a Ćuk converter connected together in a specific way.

Fig. 4

**Description**

BACKGROUND OF THE INVENTION

The present invention relates to a non-isolated DC-DC converter assembly. More particularly the present invention relates to a non-isolated DC-DC converter assembly suitable for use with photovoltaic cell means.

Nowadays one can find two main groups of photovoltaic inverters, namely isolated and non-isolated. Due to the galvanic isolation, the first group allows to ground the photovoltaic panel terminal which is mandatory in some countries due to safety issues relating to leakage current. Grounding the negative photovoltaic panel terminal is also advantageous because it alleviates degradation problems of the photovoltaic panels. Even in countries where the galvanic isolation is not obligatory, the presence of the transformer is required when some certain photovoltaic cell technologies, e.g. thin-film, are employed. However, this extra component namely the transformer, when operating at low frequency increases system overall volume, weight and cost. In order to overcome that, the low frequency transformer has been replaced by high-frequency transformers operating in an intermediary isolated dc-dc converter. Nevertheless, this alternative results in most of the cases in a more complex system configuration as well as additional cost due to higher number of active and passive devices. Due to these limitations, the photovoltaic market has redirected the eyes towards to photovoltaic inverters without any kind of transformer, called non-isolated PV inverters. This family of converters is able to provide higher efficiency with low size and volume. Also manufacturing cost may be lower. However, it still has to comply with safety and degradation issues. Therefore, it requires a dedicated topology either on the dc-dc converter side or on the inverter side.

A common photovoltaic inverter assembly comprises a boost converter connected to a full-bridge inverter. The boost converter is in charge to boost the voltage generated by a photovoltaic string to a level necessary for the inverter to transfer the power to the grid. However, although boost converter has many merits such as low number of components and simplicity, it has some disadvantages in connection with abovementioned photovoltaic inverter assembly. If the full-bridge inverter operates under a unipolar modulation, which has higher efficiency compared to bipolar modulation, a parasitic capacitance existing between the negative terminal of the photovoltaic string and ground creates a path to a common-mode current to circulate. This common-mode current will superimpose the load current causing EMI, safety and degradation problems.

In published patent application US2004/0164557 "Monopolar DC to Bipolar to AC Converter", a DC-DC converter is proposed which allows to ground at the same time the source and load. The output voltage of the DC-DC converter proposed in US2004/0164557 cannot be regulated. In operating situations where the voltage generated by the source of the DC-DC converter is below the level requested by the load, the converter has to shutdown consequently reducing system availability. Further, since the DC-DC converter of US2004/0164557 includes a buck-boost converter, the source will suffer from pulsating current.

BRIEF DESCRIPTION OF THE INVENTION

An object of the present invention is to provide a new non-isolated dc-dc converter which allows grounding the negative terminal of the photovoltaic modules, avoiding any safety or degradation issue caused by leakage current flowing in existing parasitic capacitors. The object of the invention is achieved by a non-isolated DC-DC converter assembly which is characterized by what is stated in the independent claim 1. The preferred embodiments of the invention are disclosed in the dependent claims.

The non-isolated DC-DC converter assembly according to present invention comprises a boost converter and a Cuk converter connected together in a specific way.

An advantage of the non-isolated DC-DC converter assembly of the invention is that it allows grounding of source and load at the same time. Another advantage is that the invention provides a complete adjustability of the output voltage of the non-isolated DC-DC converter. Further, the DC-DC converter assembly of the invention has current source input characteristic, whereby the current absorbed from the power supply is continuous.

The converter assembly of the invention can be installed using any kind of photovoltaic cell technologies without paying the price of low efficiency, large volume and high cost inherent in isolated photovoltaic converters. The possibility of grounding the power supply and the load at the same time allows removing the bulky transformer while still avoiding any EMI aspects caused by the presence of a common-mode current flowing through parasitic components.

BRIEF DESCRIPTION OF THE DRAWINGS

In the following the invention will be described in greater detail by means of preferred embodiments with reference to the attached drawings, in which

Figure 1 shows a conventional boost converter;
Figure 2 shows a conventional Cuk converter;
Figure 3 shows an embodiment of a non-isolated DC-DC converter assembly according to present invention connected to a photovoltaic cell; and
Figure 4 shows a simplified circuit diagram of a solar power station comprising the converter assembly of Figure 3.

DETAILED DESCRIPTION OF THE INVENTION

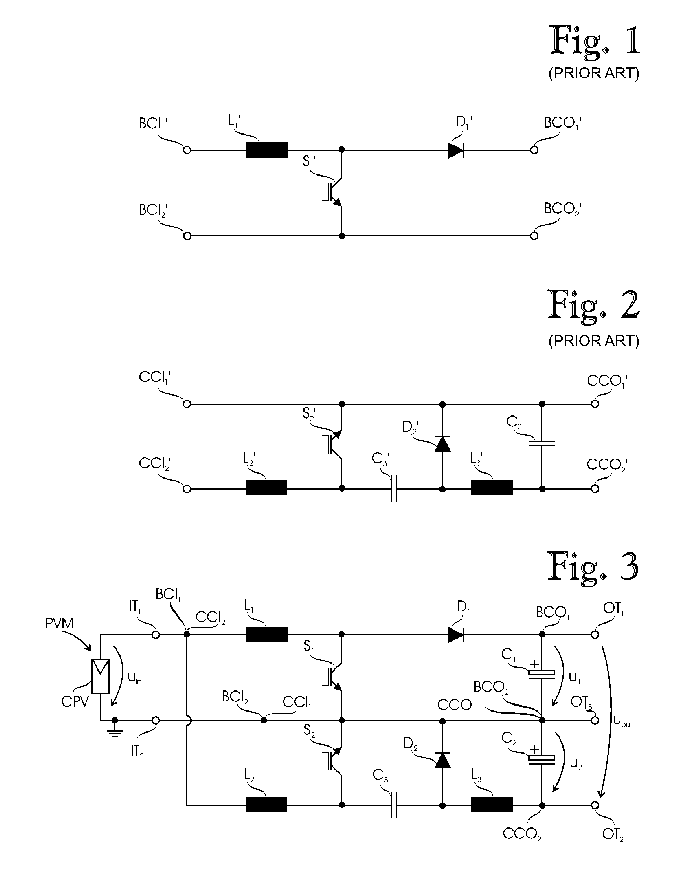

Figure 1 shows a conventional boost converter adapted to step up input voltage into higher output voltage. The boost converter comprises an inductor $L_1'$, a diode $D_1'$ and a controllable switch $S_1'$. The boost converter has a first input terminal $BCI_1'$, a second input terminal $BCI_2'$, a first output terminal $BCO_1'$ and a second output terminal $BCo_2'$. The input direct voltage is inputted through the first input terminal $BCI_1'$ and the second input terminal $BC1_2'$. The first input terminal $BCI_1'$ is a positive terminal and the second input terminal $BCI_2'$ is a negative terminal. The output voltage is present between the first output terminal $BCO_1'$ and the second output terminal $BCO_2'$, the first output terminal $BCO_1'$ being a positive terminal and the second output terminal $BCO_2'$ being a negative terminal.

The inductor $L_1'$ and the diode $D_1'$ are connected in series between the first input terminal $BCI_1'$ of the boost converter and the first output terminal $BCO_1'$ of the boost converter. The cathode of the diode $D_1'$ is connected to the first output terminal $BCO_1'$. The collector of the controllable switch $S_1'$ is connected between the inductor $L_1'$ and the anode of the diode $D_1'$, and the emitter of the controllable switch $S_1'$ is connected between the second input terminal $BCI_2'$ and the second output terminal $BCO_2'$. The second input terminal $BCI_2'$ and the second output terminal $BCO_2'$ are connected with a conductor having neither active nor passive components. Therefore the second input terminal $BCI_2'$ and the second output terminal $BCO_2'$ are in operating conditions substantially in the same electric potential.

Figure 2 shows a conventional Cuk converter. The Cuk converter is capable both stepping up and stepping down its input voltage. The Cuk converter comprises inductors $L_2'$ and $L_3'$, a diode $D_2'$, a controllable switch $S_2'$, and capacitors $C_2'$ and $C_3'$. The Cuk converter has a first input terminal $CCI_1'$, a second input terminal $CCI_2'$, a first output terminal $CCO_1'$ and a second output terminal $CCO_2'$. The input direct voltage is inputted through the first input terminal $CCI_1'$ and the second input terminal $CCI_2'$. The output voltage is present between the first output terminal $CCO_1'$ and the second output terminal $CCO_2'$.

The Cuk converter of Figure 2 is an inverting converter, which means that the output voltage is negative with respect to the input voltage. This means that if an operator wants the first output terminal $CCO_1'$ of the Cuk converter to be the positive one, then the second input terminal $CCI_2'$ must be connected to a higher electrical potential than the first input terminal $CCI_1'$ of the Cuk converter.

The inductor $L_2'$, the capacitor $C_3'$ and the inductor $L_3'$ are connected in serial between the second input terminal $CCI_2'$ of the Cuk converter and the second output terminal $CCO_2'$ of the Cuk converter such that the capacitor $C_3'$ is located electrically between the inductor $L_2'$ and the inductor $L_3'$. The inductor $L_2'$ is connected

between the second input terminal $CCI_2'$ and the capacitor $C_3'$, and the inductor $L_3'$ is connected between the second output terminal $CCO_2'$ and the capacitor $C_3'$.

A collector of the controllable switch $S_2'$ is connected between the inductor $L_2'$ and the capacitor $C_3'$, and the emitter of the controllable switch $S_2'$ is connected between the first input terminal $CCI_1'$ and the first output terminal $CCO_1'$. The first input terminal $CCI_1'$ and the first output terminal $CCO_1'$ of the Cuk converter are connected with a conductor having neither active nor passive components. Therefore first input terminal $CCI_1'$ and the first output terminal $CCO_1'$ are in operating conditions substantially in the same electric potential.

The anode of the diode $D_2'$ is connected between the capacitor $C_3'$ and the inductor $L_3'$. The cathode of the diode $D_2'$ is connected between the first input terminal $CCI_1'$ and the first output terminal $CCO_1'$.

The capacitor $C_2'$ is connected between the first output terminal $CCO_1'$ and the second output terminal $CCO_2'$. Therefore the voltage of the capacitor $C_2'$ is equal to the output voltage of the Cuk converter.

Figure 3 shows a non-isolated DC-DC converter assembly according to an embodiment of the present invention connected to a photovoltaic cell means PVM having a photovoltaic cell CPV. The photovoltaic cell CPV is adapted to convert solar energy into direct current. The photovoltaic cell CPV is adapted to generate a direct voltage $u_{in}$, which is the input voltage of the non-isolated DC-DC converter assembly. The photovoltaic cell CPV may be based on any known photovoltaic cell technology.

The converter assembly depicted in Figure 3 is a combination of the boost converter shown in Figure 1 and the Cuk converter shown in Figure 2. The converter assembly has a positive input terminal $IT_1$, a negative input terminal $IT_2$, a positive output terminal $OT_1$ and a negative output terminal $OT_2$. The input voltage of the converter assembly is present between the positive input terminal $IT_1$ and the negative input terminal $IT_2$. The boost converter and the Cuk converter are connected such that the output voltage $U_{out}$ of the converter assembly present between the positive output terminal $OT_1$ and the negative output terminal $OT_2$ is substantially a sum of the absolute values of output voltages of the boost converter and the Cuk converter.

The non-isolated DC-DC converter assembly of Figure 3 comprises all the components in the boost converter of Figure 1 and in the Cuk converter of Figure 2. Reference signs used in Figure 3 correspond to those used in Figures 1 and 2 with the exception that apostrophes (') have been removed.

The boost converter of Figure 3 has a first input terminal $BCI_1$, a second input terminal $BCI_2$, a first output terminal $BCO_1$ and a second output terminal $BCO_2$. The output voltage $U_1$ of the boost converter is present between the first output terminal $BCO_1$ and the second output terminal $BCO_2$. The Cuk converter of Figure 3 has a first input terminal $CCI_1$, a second input terminal $CCI_2$, a first output terminal $CCO_1$ and a second output terminal

CCO$_2$. The output voltage U$_2$ of the Cuk converter is present between the first output terminal CCO$_1$ and the second output terminal CCO$_2$. The output voltage U$_{out}$ of the non-isolated DC-DC converter assembly of Figure 3 is a sum of the output voltage U$_1$ of the boost converter and the output voltage U$_2$ of the Cuk converter.

The first input terminal BCI$_1$ of the boost converter and the second input terminal CCI$_2$ of the Cuk converter are conductively connected to the positive input terminal IT$_1$ such that in operating situations the first input terminal BCI$_1$, the second input terminal CC1$_2$, and the positive input terminal IT$_1$ are in the same electric potential. The second input terminal BC1$_2$ of the boost converter and the first input terminal CCI$_1$ of the Cuk converter are conductively connected to the negative input terminal IT$_2$ such that in operating situations the second input terminal BCI$_2$, the first input terminal CCI$_1$, and the negative input terminal IT$_2$ are in the same electric potential. The first output terminal BCO$_1$ of the boost converter is conductively connected to the positive output terminal OT$_1$ such that in operating situations the first output terminal BCO$_1$ and the positive output terminal OT$_1$ are in the same electric potential. The second output terminal CCO$_2$ of the Cuk converter is conductively connected to the negative output terminal OT$_2$ such that in operating situations the second output terminal CCO$_2$ and the negative output terminal OT$_2$ are in the same electric potential.

The converter assembly of Figure 3 has an intermediate output terminal OT$_3$, which is conductively connected to the second output terminal BCO$_2$ of the boost converter and the first output terminal CCO$_1$ of the Cuk converter. Since there are neither active nor passive components between the intermediate output terminal OT$_3$ and the negative input terminal IT$_2$, these two terminals are in operating situations in the same electric potential.

The boost converter of Figure 3 comprises a first inductor L$_1$, a first diode D$_1$, a first controllable switch S$_1$ and a first capacitor C$_1$. The first inductor L$_1$ and the first diode D$_1$ are connected in series between the first input terminal BCI, of the boost converter and the first output terminal BCO$_1$ of the boost converter. The cathode of the first diode D$_1$ is connected to the first output terminal BCO$_1$ of the boost converter. The first controllable switch S$_1$ is located electrically between a point situated electrically between the first inductor L$_1$ and the first diode D$_1$, and a point situated electrically between the second input terminal BCI$_2$ of the boost converter and the second output terminal BCO$_2$ of the boost converter. The collector of the first controllable switch S$_1$ is connected between the first inductor L$_1$ and the anode of the first diode D$_1$. The first capacitor C$_1$ is connected between the first output terminal BCO$_1$ of the boost converter and the second output terminal BCO$_2$ of the boost converter.

It is to be noted that in the boost converter of Figure 1 there is no first capacitor C$_1$ or any equivalent component. There are no further additional components in the converter assembly of Figure 3. All other components of the converter assembly of Figure 3 are present in the boost converter of Figure 1 and in the Cuk converter of Figure 2.

The Cuk converter of Figure 3 comprises a second inductor L$_2$, a third inductor L$_3$, a second diode D$_2$, a second controllable switch S$_2$, a second capacitor C$_2$ and a third capacitor C$_3$. The second inductor L$_2$, the third capacitor C$_3$ and the third inductor L$_3$ being connected in serial between the second input terminal CCI$_2$ of the Cuk converter and the second output terminal CCO$_2$ of the Cuk converter such that the third capacitor C$_3$ is located electrically between the second inductor L$_2$ and the third inductor L$_3$. The second controllable switch S$_2$ is located electrically between a point situated electrically between the second inductor L$_2$ and the third capacitor C$_3$, and a point situated electrically between the first input terminal CCI, of the Cuk converter and the first output terminal CCO$_1$, of the Cuk converter. The collector of the second controllable switch S$_2$ is connected between the second inductor L$_2$ and the third capacitor C$_3$. The second diode D$_2$ is located electrically between a point situated electrically between the third capacitor C$_3$ and the third inductor L$_3$, and a point situated electrically between the first input terminal CCI, of the Cuk converter and the first output terminal CCO$_1$, of the Cuk converter. The anode of the second diode D$_2$ is connected between the third capacitor C$_3$ and the third inductor L$_3$. The cathode of the second diode D$_2$ is connected between the first input terminal CCI$_1$, and the first output terminal CCO$_1$. The second capacitor C$_2$ is located electrically between the first output terminal CCO$_1$ of the Cuk converter and the second output terminal CCO$_2$ of the Cuk converter.

The negative input terminal IT$_2$ is grounded. Therefore also the second output terminal BCO$_2$ of the boost converter, the first output terminal CCO$_1$ of the Cuk converter, and the intermediate output terminal OT$_3$ are grounded. Further, a point between the emitter of the first controllable switch S$_1$ and the emitter of the second controllable switch S$_2$ is grounded, a point between series-connected first capacitor C$_1$ and second capacitor C$_2$ is grounded, and a cathode of the second diode D$_2$ is grounded.

As mentioned before the output voltage U$_{out}$ is a sum of the output voltage U$_1$ of the boost converter and the output voltage U$_2$ of the Cuk converter. Voltages U$_1$ and U$_2$ may be regulated independently according to equations {1} and {2} below. Voltage U$_1$ is controlled by adjusting the duty-cycle DS$_1$ of switch S$_1$ according to equation {1}. The duty-cycle DS$_2$ of switch S$_2$ is controlled according to equation {2} in order to regulate voltage $_{U2}$.

$$u_1 = \frac{1}{1 - DS_1} \cdot u_{in} \qquad \{1\}$$

$$u_2 = \frac{DS_2}{1 - DS_2} \cdot u_{in} \qquad \{2\}$$

The non-isolated DC-DC converter assembly of Figure 3 has current source input characteristic, whereby the current absorbed from the power supply namely the photovoltaic cell means PVM is continuous. A ripple peak-to-peak value of the current absorbed from the photovoltaic cell means PVM is dependent on the inductances of the first inductor $L_1$ and second inductor $L_2$.

In the embodiments discussed above, the first controllable switch $S_1$ and the second controllable switch $S_2$ are IGBTs (Insulated Gate Bipolar Transistors), but one skilled in the art understands that other types of controllable switches may also be used as the first controllable switch $S_1$ and the second controllable switch $S_2$.

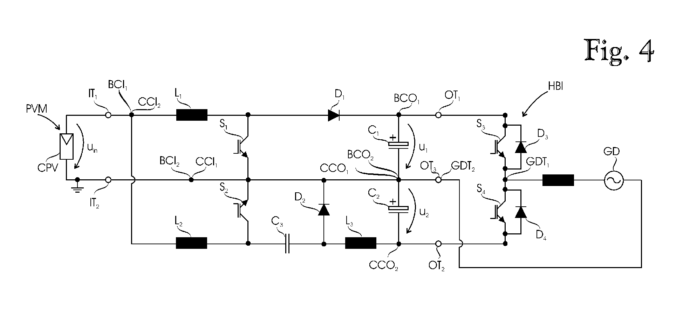

Figure 4 shows a simplified circuit diagram of a solar power station comprising photovoltaic cell means PVM, the non-isolated DC-DC converter assembly of Figure 3, and a half-bridge inverter HBI. The connection between the photovoltaic cell means PVM and the non-isolated DC-DC converter assembly is identical to the connection in Figure 3. The half-bridge inverter HBI connected to the DC-DC converter assembly is a conventional two-level half-bridge inverter. The half-bridge inverter HBI is connected to an electrical power network GD. The half-bridge inverter HBI comprises a third controllable switch $S_3$, a third diode $D_3$, a fourth controllable switch $S_4$, and a fourth diode $D_4$. The third controllable switch $S_3$ and the fourth controllable switch $S_4$ are connected in series between the positive output terminal $OT_1$ and the negative output terminal $OT_2$. The third diode $D_3$ is connected anti-parallel with the third controllable switch $S_3$. The fourth diode $D_4$ is connected anti-parallel with the fourth controllable switch $S_4$.

The electrical power network GD has a first grid terminal $GDT_1$ and a second grid terminal $GDT_2$. The first grid terminal $GDT_1$ is connected between the emitter of the third controllable switch $S_3$ and the collector of the fourth controllable switch $S_4$. The second grid terminal $GDT_2$ is connected to the intermediate output terminal $OT_3$. The negative input terminal IT2 and the intermediate output terminal $OT_3$ are connected with a conductor having neither active nor passive components. Therefore in operating conditions the second grid terminal $GDT_2$ and the negative input terminal IT2 are in the same electric potential. Consequently the second grid terminal $GDT_2$ is earthed via the ground connection adjacent the negative terminal of the photovoltaic cell CPV.

Herein expression "solar power station" must be interpreted broadly. The expression is not limited to systems adapted to capture energy exclusively from sunlight. Instead the light may originate for example from some industrial process or from any other source. Further, the nominal power of the solar power station is not limited in any way. Therefore a solar power station may be a device capable of generating couple of watts or a huge scale power plant having nominal output of several gigawatts.

In the circuit diagram of Figure 4 the electrical power network GD represents the load of the half-bridge inverter HBI, and therefore also the load of the entire inverter assembly comprising the non-isolated DC-DC converter assembly and the half-bridge inverter HBI. One skilled in the art understands that it is possible to connect a variety of different loads to the half bridge inverter.

In an alternative embodiment a DC-DC converter assembly may be connected to an electrical power network by another type of half-bride inverter instead of a two-level half-bridge inverter. The DC-DC converter assembly may be connected to the grid by a conventional half-bridge three-level NPC inverter. It is also possible to use a higher level half-bridge inverter such as a five-level half-bridge inverter.

It will be obvious to a person skilled in the art that the inventive concept can be implemented in various ways. The invention and its embodiments are not limited to the examples described above but may vary within the scope of the claims.

**Claims**

1. A non-isolated DC-DC converter assembly having a positive input terminal ($IT_1$), a negative input terminal ($IT_2$), a positive output terminal ($OT_1$) and a negative output terminal ($OT_2$), the converter assembly comprising a boost converter having a first input terminal ($BCI_1$), a second input terminal ($BCI_2$), a first output terminal ($BCO_1$) and a second output terminal ($BCO_2$), **characterized in that** the converter assembly further comprises a Cuk converter and an intermediate output terminal ($OT_3$), the Cuk converter having a first input terminal ($CCI_1$), a second input terminal ($CCI_2$), a first output terminal ($CCO_1$) and a second output terminal ($CCO_2$), the first input terminal ($BCI_1$) of the boost converter and the second input terminal ($CC1_2$) of the Cuk converter are conductively connected to the positive input terminal ($IT_1$), the second input terminal ($BCI_2$) of the boost converter and the first input terminal ($CCI_1$) of the Cuk converter are conductively connected to the negative input terminal ($IT_2$), the first output terminal ($BCO_1$) of the boost converter is conductively connected to the positive output terminal ($OT_1$), the second output terminal ($CCO_2$) of the Cuk converter is conductively connected to the negative output terminal ($OT_2$), the second output terminal ($BCO_2$) of the boost converter and the first output terminal ($CCO_1$) of the Cuk converter being conductively connected to the intermediate output terminal ($OT_3$), the negative input terminal ($IT_2$) and the intermediate output terminal ($OT_3$) being adapted to be grounded.

2. A converter assembly according to claim 1, **characterized in that** the negative input terminal ($IT_2$) and the intermediate output terminal ($OT_3$) are conductively connected to each other.

3. A converter assembly according to claim 1 or 2, **character**i z e d in that the boost converter comprises a first inductor ($L_1$), a first diode ($D_1$), a first controllable switch ($S_1$) and a first capacitor ($C_1$), the first inductor ($L_1$) and the first diode ($D_1$) being connected in series between the first input terminal ($BCI_1$) of the boost converter and the first output terminal ($BCO_1$) of the boost converter, the first controllable switch ($S_1$) being located electrically between a point situated electrically between the first inductor ($L_1$) and the first diode ($D_1$), and a point situated electrically between the second input terminal ($BCI_2$) of the boost converter and the second output terminal ($BCO_2$) of the boost converter, the first capacitor ($C_1$) being located electrically between the first output terminal ($BCO_1$) of the boost converter and the second output terminal ($BCO_2$) of the boost converter.

4. A converter assembly according to any one of the preceding claims, **characterized in that** the Cuk converter comprises a second inductor ($L_2$), a third inductor ($L_3$), a second diode ($D_2$), a second controllable switch ($S_2$), a second capacitor ($C_2$) and a third capacitor ($C_3$), the second inductor ($L_2$), the third capacitor ($C_3$) and the third inductor ($L_3$) being connected in serial between the second input terminal ($CCI_2$) of the Cuk converter and the second output terminal ($CCO_2$) of the Cuk converter such that the third capacitor ($C_3$) is located electrically between the second inductor ($L_2$) and the third inductor ($L_3$), the second controllable switch ($S_2$) being located electrically between a point situated electrically between the second inductor ($L_2$) and the third capacitor ($C_3$), and a point situated electrically between the first input terminal ($CCI_1$) of the Cuk converter and the first output terminal ($CCO_1$) of the Cuk converter, the second diode ($D_2$) being located electrically between a point situated electrically between the third capacitor ($C_3$) and the third inductor ($L_3$), and a point situated electrically between the first input terminal ($CCI_1$) of the Cuk converter and the first output terminal ($CCO_1$) of the Cuk converter, the second capacitor ($C_2$) being located electrically between the first output terminal ($CCO_1$) of the Cuk converter and the second output terminal ($CCO_2$) of the Cuk converter.

5. A converter assembly according to any one of claims 2 to 4, **characterized in that** a point between the emitter of the first controllable switch ($S_1$) and the emitter of the second controllable switch ($S_2$), a point between series-connected first capacitor ($C_1$) and second capacitor ($C_2$), and a cathode of the second diode ($D_2$) are in operating situations substantially in the same electric potential as the negative input terminal ($IT_2$).

6. A solar power station comprising photovoltaic cell means (PVM) having at least one photovoltaic cell (CPV) adapted to convert solar energy into direct current, **characterized in that** the solar power station further comprises a converter assembly according to any one of the preceding claims, the at least one photovoltaic cell (CPV) being connected between the positive input terminal ($IT_1$) and the negative input terminal ($IT_2$) of the converter assembly.

7. An inverter assembly comprising a half-bridge inverter (HBI), **characterized in that** the inverter assembly further comprises a non-isolated DC-DC converter assembly as claimed in any one of claims 1 to 5, the half-bridge inverter (HBI) being connected between the positive output terminal ($OT_1$) and the negative output terminal ($OT_2$), the intermediate output terminal ($OT_3$) being adapted to be connected to the load of the half-bridge inverter (HBI).

Fig. 1
(PRIOR ART)

Fig. 2
(PRIOR ART)

Fig. 3

7

Fig. 4

Europäisches
Patentamt

European
Patent Office

Office européen
des brevets

## EUROPEAN SEARCH REPORT

Application Number

EP 09 17 4753

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2003/117209 A1 (TSUCHIYA CHIKARA [JP] ET AL) 26 June 2003 (2003-06-26) * figure 12 * * paragraphs [0006] - [0010] * ----- | 1-7 | INV. H02M3/158 |
| Y | EP 0 534 422 A2 (YAMAHA CORP [JP]) 31 March 1993 (1993-03-31) * column 1, line 35 - line 57 * * figures 18-20 * ----- | 1-7 | |
| A | US 6 252 383 B1 (WITTENBREDER ERNEST H [US]) 26 June 2001 (2001-06-26) * figure 2 * * column 1, line 51 - line 58 * ----- | 1-7 | |
| A | US 2008/278092 A1 (LYS IHOR [US] ET AL) 13 November 2008 (2008-11-13) * figures 4-6 * * paragraphs [0014], [0015] * ----- | 1-7 | |
| A | US 2009/051221 A1 (LIU HAN-TAO [CN] ET AL) 26 February 2009 (2009-02-26) * figure 3 * * paragraphs [0005], [0006] * ----- | 1 | TECHNICAL FIELDS SEARCHED (IPC)  H02M |
| A | CN 1 315 249 C (WANG YUFU [CN]) 9 May 2007 (2007-05-09) * abstract * * figures 1-3 * ----- | 1-7 | |
| A,D | US 2004/164557 A1 (WEST RICHARD [US] WEST RICHARD T [US]) 26 August 2004 (2004-08-26) * figure 1 * * paragraph [0001] * ----- | 7 | |

The present search report has been drawn up for all claims

| Place of search | Date of completion of the search | Examiner |
|---|---|---|
| The Hague | 15 March 2010 | Lund, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 09 17 4753

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2010

| Patent document cited in search report | | | Publication date | Patent family member(s) | | | Publication date |
|---|---|---|---|---|---|---|---|
| US 2003117209 | A1 | | 26-06-2003 | CN | 1430326 | A | 16-07-2003 |
| | | | | DE | 60213754 | T2 | 30-11-2006 |
| | | | | EP | 1324477 | A2 | 02-07-2003 |
| | | | | JP | 3888895 | B2 | 07-03-2007 |
| | | | | JP | 2003186552 | A | 04-07-2003 |
| | | | | KR | 20030053049 | A | 27-06-2003 |
| | | | | TW | 588498 | B | 21-05-2004 |
| EP 0534422 | A2 | | 31-03-1993 | DE | 69223477 | D1 | 22-01-1998 |
| | | | | DE | 69223477 | T2 | 09-07-1998 |
| | | | | JP | 2522128 | B2 | 07-08-1996 |
| | | | | JP | 5091729 | A | 09-04-1993 |
| US 6252383 | B1 | | 26-06-2001 | NONE | | | |
| US 2008278092 | A1 | | 13-11-2008 | WO | 2008137460 | A2 | 13-11-2008 |
| US 2009051221 | A1 | | 26-02-2009 | CN | 101373930 | A | 25-02-2009 |
| CN 1315249 | C | | 09-05-2007 | CN | 1588772 | A | 02-03-2005 |
| US 2004164557 | A1 | | 26-08-2004 | US | 2008037305 | A1 | 14-02-2008 |

EPO FORM P0459

For more details about this annex : see Official Journal of the European Patent Office, No. 12/82

**EP 2 317 635 A1**

REFERENCES CITED IN THE DESCRIPTION

**Patent documents cited in the description**

- US 20040164557 A